# EUROPEAN PATENT APPLICATION

(11) **EP 1 933 484 A2**
(43) Date of publication of application: **18.06.2008**
(21) Application number: 07123019.7
(22) Date of filing: 12.12.2007
(51) Int. Cl.: H04H 60/72

(54) **Method of providing application information of broadcast data service in DVB-H system, and system therefor**

(30) Priority: 15.12.2006 KR 20060129028
(71) Applicant: Samsung Electronics Co., Ltd., Suwon-si, Gyeonggi-do (KR)
(72) Inventor: Jung, Ji-Wuck, Gyeonggi-do (KR); Jeon, Jin-Woo, Gyeonggi-do (KR); Kim, Young-Jip, Gyeonggi-do (KR); Lee, Byoung-Dai, Gyeonggi-do (KR); Kim, Hyun-Chul, Gyeonggi-do (KR)
(74) Representative: Grünecker, Kinkeldey, Stockmair & Schwanhäusser Anwaltssozietät

(57) **Abstract**

A method of providing a broadcast data service in a Digital Video Broadcasting-Handheld (DVB-H) system and a system therefore is provided. The system includes a broadcast service providing server for inserting at least one of application type information and application execution information into an acquisition fragment of an Electronic Service Guide (ESG) and transmitting the ESG, and a broadcast receiving terminal for receiving the ESG and determining at least one of the application type information and application execution information contained in the acquisition fragment when the broadcast data service is provided.

## Description

The present invention relates generally to a method of providing application information of a broadcast data service in a Digital Video Broadcasting-Handheld (DVB-H) system, and a system therefor.

In general, digital broadcasting transmits a broadcast signal, which has been transmitted in an analog method, in a digital method to provide high image quality, high sound quality, and various services to users. There are various types of digital broadcasting, for example, Digital Video Broadcasting (DVB), Digital Audio Broadcasting (DAB), Digital Multimedia Broadcasting (DMB), MediaFLO (Forward Link Only), and so on. DVB denotes a digital broadcasting standard in Europe, and the DVB standard is classified into several types according to characteristics. That is, DVB-Terrestrial (DVB-T) is a standard for terrestrial digital broadcasting, DVB-Satellite (DVB-S) is a standard for satellite digital broadcasting, and DVB-Handheld (DVB-H) is a standard for mobile digital broadcasting.

DVB-H is a technology standard established to provide terrestrial digital broadcasting to moving terminals with a good reception rate and can implement digital mobile multimedia broadcasting for providing a broadcast program or content having high image quality and high sound quality whenever and wherever even during driving or walking.

Unlike other digital broadcasting schemes, a DVB-H scheme transmits important information required for a broadcast service by inserting most of the important information into an Electronic Service Guide (ESG). DVB-H uses a File Delivery over Unidirectional Transport (FLUTE) protocol as a Content Delivery Protocol (CDP). The FLUTE protocol is a protocol for transmitting text, audio, video, and image files. In an initial stage of DVB-H, which has been implemented, the FLUTE protocol is used to download files required for ESG construction and ESG update. A user can select a TV channel or radio channel of interest or select an item to be downloaded, by using the ESG information. The ESG also provides information required for a terminal to access a specific Internet Protocol (IP) stream in a DVB-H Transport Stream (ST). A process of processing the ESG is divided into three processes described below. In detail, the three processes are an ESG bootstrapping process indicating a process of determining which ESG a terminal can receive and determining how the terminal can receive the ESG, an ESG acquisition process indicating a process of gathering and processing ESG information in a terminal, and an ESG update process indicating a process of restoring the latest version of ESG information in a terminal. In addition, an interactive network exists between a broadcast service providing server and the terminal, and it is possible to communicate between the broadcast service providing server and the terminal.

In DVB-H, video and audio broadcast services are provided as a basic broadcast service. Furthermore, DVB-H defines a broadcast data service. That is, service types provided using the DVB-H standard can be largely divided into a video service, an audio service, and a data service. Here, information on each service is transmitted using ESG information. A terminal for receiving DVB-H broadcasting can determine a service type and obtain information related to the service type by analyzing ESG information carried on a broadcast signal. The ESG information includes Extensible Markup Language (XML) data, and a format of ESG XML information is defined in the standard using an XML scheme.

DVB-H broadcast information is transmitted as ESG fragment information. ESG fragments are divided into several types according to transmitted information. ESG data defined in the DVB-H service is comprised of 7 fragments, i.e., a service bundle fragment, a purchase fragment, a purchase channel fragment, a service fragment, a schedule event fragment, a content fragment, and an acquisition fragment. A terminal can acquire entire DVB-H broadcast information by gathering these fragments.

Meanwhile, there are various data service types which use broadcasting. For example, a DAB service in Europe or a Terrestrial-DMB (T-DMB) service in Republic of Korea which provides a Broadcasting Web Site (BWS) service, a Slide Show Service (SSS), a Dynamic Label Segment (DLS) service, a Transport Protocol Experts Group (TPEG) service as broadcast data services. In a DAB or T-DMB system, a standard related to transmission of broadcast application information is established to transmit Service Information (SI) for a broadcast data service to a broadcast receiving terminal. In a DAB system, a type of a data service transmitted using broadcasting is transmitted to a broadcast receiving terminal using the SI, and additional information required to execute received broadcast application data is transmitted using Multimedia Object Transfer (MOT) directory and MOT header information of an MOT protocol.

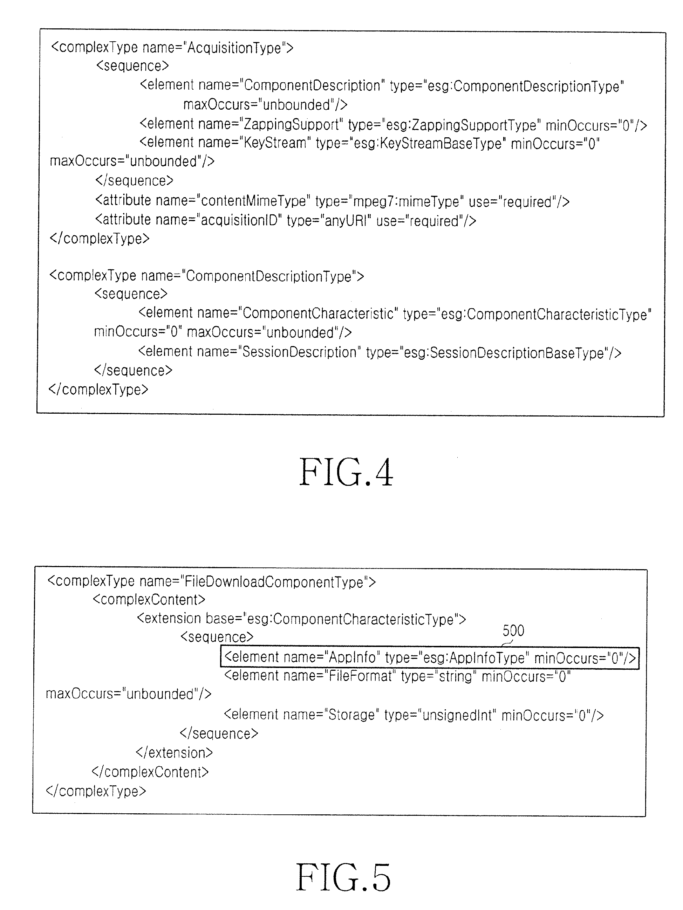

However, unlike DAB or T-DMB, in the ESG of DVB-H, a method of transmitting application information of various broadcast data services is not clearly suggested. Information related to broadcast service types and services is defined in the ESG acquisition fragment among the ESG fragments of DVB-H. Syntax of an ESG acquisition fragment is illustrated in FIG. 4. Information regarding each service is transmitted using a component characteristic element of a component description type. In addition, a component characteristic type includes a video component type, an audio component type, and a text component type according to video, audio, and data services, respectively.

As described above, in a DVB-H system, data service related information included in the ESG acquisition fragment is defined in a file download component type, wherein only information on a Multipurpose Internet Mail Extensions (MIME) type of files transmitted using broadcast information is contained in the file download component type.

That is, in an existing DVB-H system, application type information on what data application a broadcast data service is and information to execute a transmitted application are not included. Thus, demands for providing application type information and application execution information transmitted for performing various broadcast data services are increasing.

The present invention is designed to solve at least the above problems and/or disadvantages and to provide at least the advantages described below. Accordingly, the object of the present invention is to provide a method and system for providing application type information and application execution information transmitted for a broadcast data service.

This object is solved by the subject matter of the independent claims.

Preferred embodiments are defined by the dependent claims.

According to an aspect of the present invention, a system for providing application information of a broadcast data service is provided. The system includes a broadcast service providing server for inserting at least one of application type information and application execution information into an acquisition fragment of an Electronic Service Guide (ESG) and transmitting the ESG, and a broadcast receiving terminal for receiving the ESG and determining at least one of the application type information and application execution information contained in the acquisition fragment when the broadcast data service is provided.

According to another aspect of the present invention, a method of providing application information of a broadcast data service in a Digital Video Broadcasting-Handheld (DVB-H) system is provided. The method includes inserting at least one of application type information and application execution information into an acquisition fragment of an Electronic Service Guide (ESG) and transmitting the ESG, and receiving the ESG and determining at least one of the application type information and application execution information contained in the acquisition fragment when the broadcast data service is provided.

The above object and other aspects, features and advantages of the present invention will become more apparent from the following detailed description of certain exemplary embodiments taken in conjunction with the accompanying drawing, in which:
FIG. 1 is a schematic block diagram of a Digital Video Broadcasting-Handheld (DVB-H) system according to an exemplary embodiment of the present invention;
FIG. 2 is a block diagram of a broadcast receiving terminal according to an exemplary embodiment of the present invention;
FIG. 3 is a signaling diagram of a process of transmitting data application information using Electronic Service Guide (ESG) data from a broadcast service providing server to a broadcast receiving terminal according to an exemplary embodiment of the present invention;
FIG. 4 illustrates syntax of a conventional ESG acquisition fragment;
FIG. 5 illustrates a file download component type contained in an ESG acquisition fragment according to an exemplary embodiment of the present invention;
FIG. 6 illustrates a scheme of an application information type (AppInfo Type) according to an exemplary embodiment of the present invention;
FIG. 7 illustrates a classification scheme of application types according to an exemplary embodiment of the present invention;
FIGs. 8 and 9 illustrate schemes of an extended AppInfoType of information for application data execution according to an exemplary embodiment of the present invention; and
FIG. 10 illustrates syntax of an ESG acquisition fragment containing application type information and application data execution information according to an exemplary embodiment of the present invention.

Throughout the drawings, like reference numerals will be understood to refer to like parts, components and structures.

The following description with reference to the accompanying drawings is provided to assist in a comprehensive understanding of the exemplary embodiments of the present invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention. Also, descriptions of well-known functions and constructions are omitted for clarity and conciseness.

An aspect of the present invention suggests a method of transmitting data application service information using Electronic Service Guide (ESG) information of a Digital Video Broadcasting-Handheld (DVB-H) system.

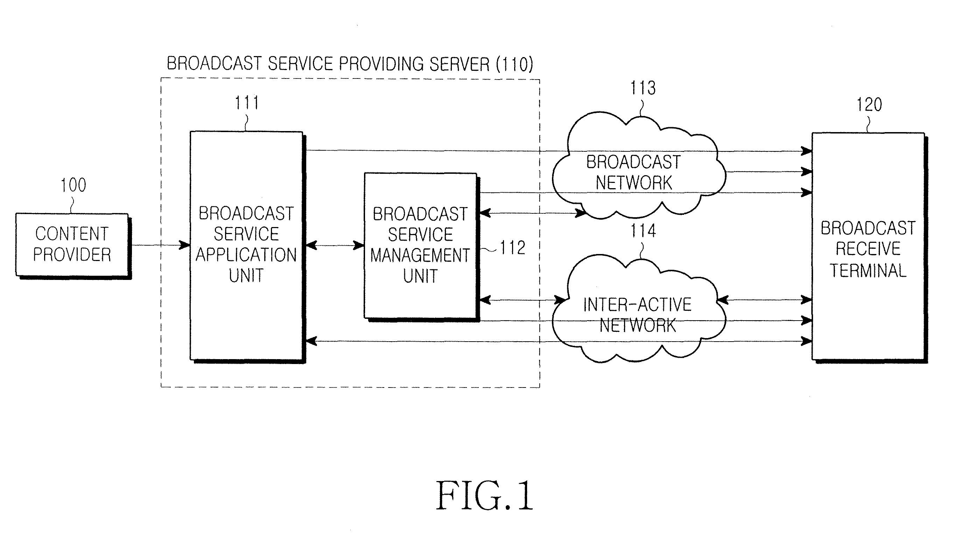

FIG. 1 is a schematic block diagram of a DVB-H system according to an exemplary embodiment of the present invention.

Referring to FIG. 1, the DVB-H system includes a broadcast service providing server 110 for generating a Transport Stream (TS) of content provided by a content provider 100 and broadcasting the TS, a broadcast network 113 for broadcasting the TS broadcasted by the broadcast service providing server 110 to a broadcast receiving terminal 120, and the broadcast receiving terminal 120 for receiving the broadcasted TS and performing a digital broadcast service using the TS. The broadcast service providing server 110 includes a broadcast service application unit 111 and a broadcast service management unit 112, wherein the broadcast service application unit 111 transmits an audio/video stream and file data to the broadcast receiving terminal 120, and the broadcast service management unit 112 transmits ESG data to the broadcast receiving terminal 120.

In an exemplary embodiment, when a broadcast data service is provided, the broadcast service providing server 110 transmits an ESG containing an ESG acquisition fragment containing information on a transmitted application type and information for executing transmitted data to the broadcast receiving terminal 120. In addition, the broadcast receiving terminal 120, which has received the ESG, can determine the application type information and the application data execution information contained in the ESG acquisition fragment when the broadcast data service is provided.

In order to perform a broadcast data application service, two types of application information are required. First information is information on an application type indicating what kind of application data is transmitted using a broadcast signal. Second information is specific information of an application required to execute transmitted application data. For example, in a Broadcasting Web Site (BWS) service, a notice must be given regarding which one of received broadcast data files is a first page of a broadcasting website. Information on the first page of a broadcasting website may be specific information of the BWS service.

A method used by the broadcast service providing server 110 to provide application type information and application execution information using an ESG according to an exemplary embodiment of the present invention will be described first, and a method used by the broadcast receiving terminal 120 to determine application type information and application execution information for a corresponding broadcast data service will be described.

When a broadcast service providing server 110 tries to transmit application type information and application execution information, a file download component type contained in an ESG acquisition fragment transmitted from the broadcast service providing server 110 can be as illustrated in FIG. 5.

According to an exemplary embodiment of the present invention, a scheme of modifying the file download component type related to a data service from a component characteristic type of an acquisition fragment of a typical ESG illustrated in FIG. 4 is provided. Referring to FIG. 5, an application information (AppInfo) element 500 of the file download component type is inserted into the ESG acquisition fragment so that broadcast data application information can be included using the AppInfo element 500.

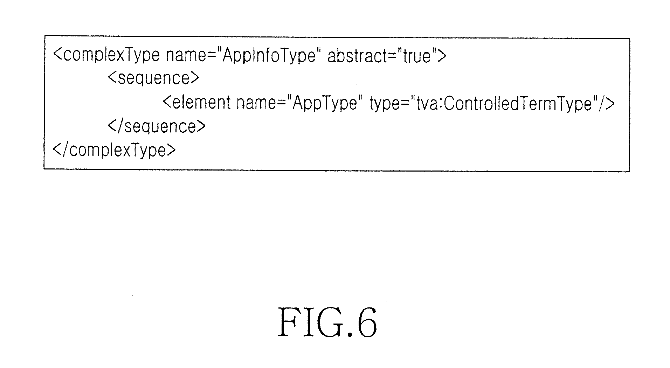

A scheme of an application information type (AppInfoType), which is a type of the AppInfo element, can be as illustrated in FIG. 6. Information on broadcast application types can be transmitted using application types (AppType) in the form of ControlledTermType of the AppInfoType. An exemplary embodiment of the present invention suggests that basic application types (AppType) are classified using a classification scheme and added into an ESG appendix portion.

Referring to FIG. 6, the AppInfoType is formed using an abstract complex type so that the AppInfoType can be extended and used according to a type of a broadcast data application that is to be actually served. In an exemplary embodiment of the present invention, as illustrated in FIG. 6, the expandability is considered by defining the AppInfo Type as an abstract type. On the other hand, in DAB or T-DMB, since broadcast data application types are fixed in the standard, if another broadcast application service is added in the future, there is an expandability problem in that the standard must be revised. Thus, in an exemplary embodiment of the present invention, a format for transmitting information related to broadcast application services is defined in an ESG, and specific information related to each application service can be transmitted by expanding the defined format to fit a data application desired to serve. Accordingly, demands of various data services of many broadcast service providers can be satisfied. In addition, by adding basic broadcast application types and an extended AppInfoType to an appendix portion of the ESG standard, existing application services can be used as they are.

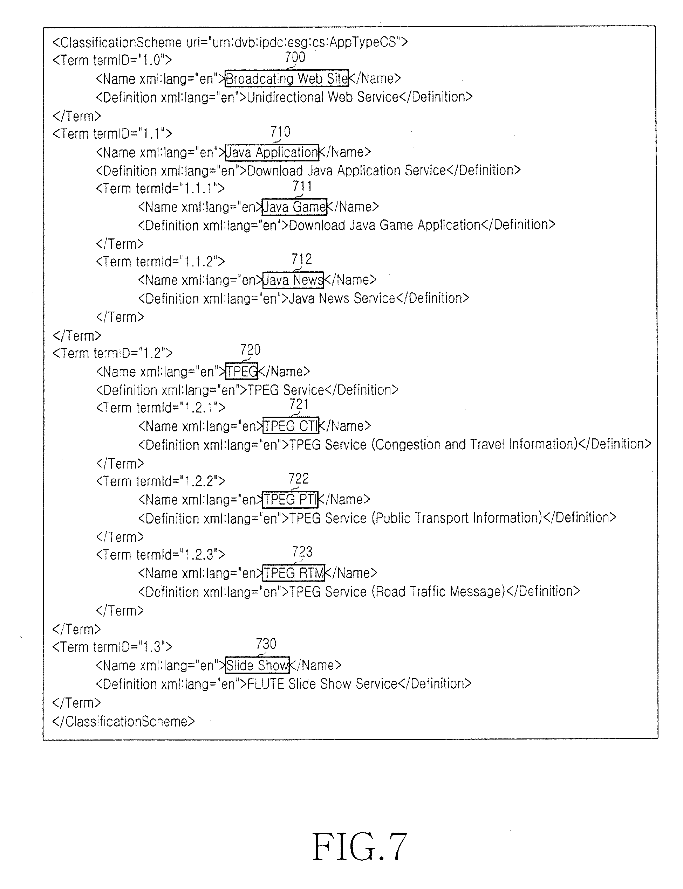

A classification scheme in which broadcast data service types contained in the scheme of the AppInfoType illustrated in FIG. 6 are classified will now be described with reference to FIG. 7. FIG. 7 illustrates a classification scheme of application types according to an exemplary embodiment of the present invention.

Referring to FIG. 7, when a value of "Term termld" is "1.0", this indicates that an application type of Broadcasting Web Site 700 is provided. When the value of "Term termld" is "1.1", this indicates that the provided application type is Java Application 710. When the value of "Term termld" is "1.1.1", this indicates that the provided application type is Java Game 711. When the value of "Term termld" is "1.1.2", this indicates that the provided application type is Java News 712. When the value of "Term termld" is "1.2", this indicates that the provided application type is TPEG 720 for providing traffic information. When the value of "Term termld" is "1.2.1", this indicates that the provided application type is TPEG Congestion Travel-time Information(CTI) 721 indicating congested traffic information. When the value of "Term termld" is "1.2.2", this indicates that the provided application type is TPEG Public Transport Information (PTI) 722 for providing public transportation information of traffic information. When the value of "Term termld" is "1.2.3", this indicates that the provided application type is TPEG Road Traffic Message (RTM) 723 for providing a road traffic message. When the value of "Term termld" is "1.3", this indicates that the provided application type is Slide Show 730 for providing traffic information.

That is, in order to provide application type information using the ESG acquisition fragment in an exemplary embodiment of the present invention, the classification scheme illustrated in FIG. 7 is referred to, and a type value corresponding to application type information becomes a value of the ControlledTermType illustrated in FIG. 6.

In the application type classification scheme illustrated in FIG. 7 according to an exemplary embodiment of the present invention, when a broadcast provider wants to provide another data application service, a corresponding AppType can be defined and used to fit the broadcast provider.

According to an exemplary embodiment of the present invention, information on application types and specific information for executing a transmitted data application can be inserted into an ESG and provided, wherein the application execution information can be defined as a complex type obtained by extending the AppInfo Type.

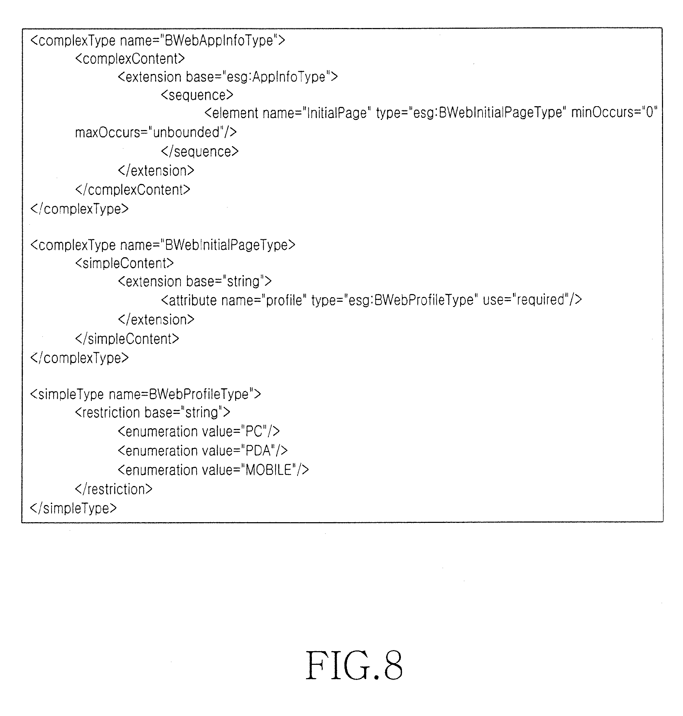

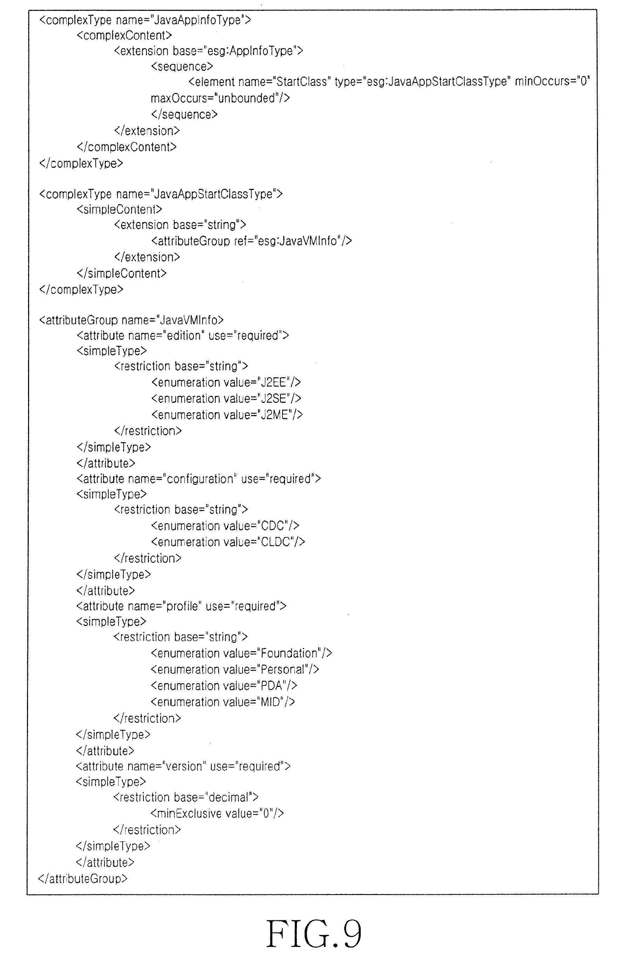

Schemes of a complex type obtained by extending an AppInfo Type to provide an ESG containing application execution information will now be described with reference to FIGs. 8 and 9. FIG. 8 illustrates an extended AppInfoType of the BWS service, and FIG. 9 illustrates an extended AppInfoType of a Java application service. In an exemplary embodiment, the extended application information types suggested in FIGs. 8 and 9 can be included in the appendix of the ESG standard as recommendations.

As described above, the broadcast service providing server 110 according to an exemplary embodiment of the present invention can transmit information on broadcast data application services in various forms using the ESG. For example, when a broadcast provider wants to provide a predetermined data application service, information required to provide the predetermined data application service can be contained in an ESG by extending the AppinfoType as illustrated in FIGs. 8 and 9. If the data application service desired by the broadcast provider is one of the data services suggested in the appendix of the ESG standard, data application information can be transmitted using the application classification scheme and the extended AppinfoType illustrated in FiGs. 7, 8, and 9.

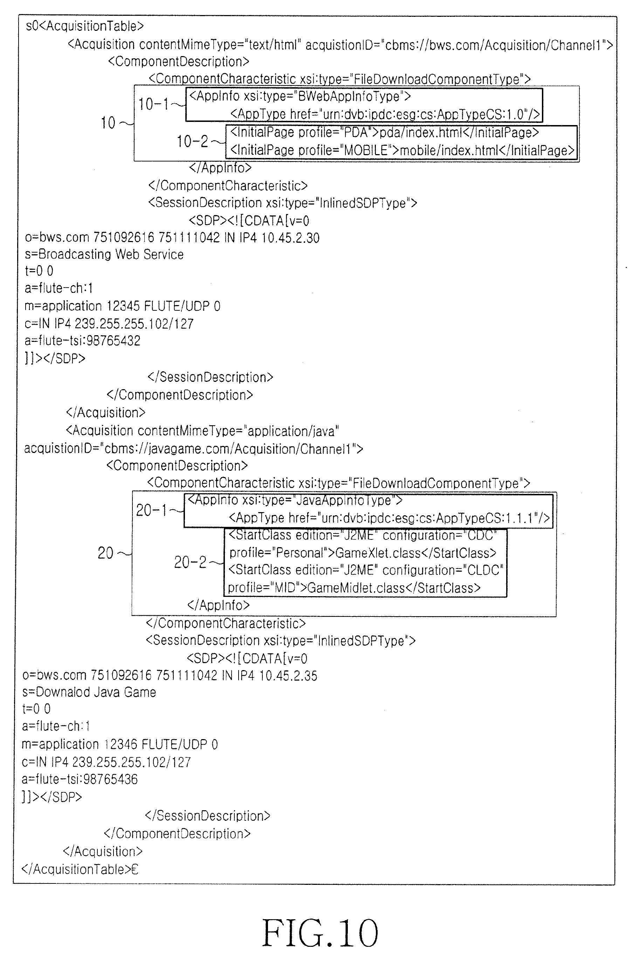

An ESG using syntax of an acquisition fragment to contain application type information and application data execution information will now be described with reference to FIG. 10. FIG. 10 illustrates syntax of an acquisition fragment containing application type information and application data execution information using the recommended classification scheme and the extended AppinfoType illustrated in FIGs. 7, 8, and 9, according to an exemplary embodiment of the present invention.

Referring to FIG. 10, the ESG acquisition fragment contains application type information and application data execution information as illustrated by 10 and 20.

In exemplary implementation, in the case of reference numeral 10, a type of a transmitted broadcast data application is transmitted as illustrated by 10-1, wherein an application type value is "1.0". Referring to FIG. 7, when the application type value is "1.0", broadcast application type information indicates the BWS service. Application execution information is also transmitted as illustrated by 10-2, wherein information on an initial page for a Personal Digital Assistant (PDA) and a mobile terminal is contained.

In the case of reference numeral 20, a type of a transmitted broadcast data application is transmitted as illustrated by 20-1, wherein an application type value is "1.1.1". Referring to FIG. 7, when the application type value is "1.1.1", broadcast application type information indicates the Java Game service. Application execution information can also be contained as illustrated by 10-2.

The broadcast receiving terminal 120, which has received the ESG illustrated in FIG. 10, can confirm the broadcast data application type information and the application execution information 10 and 20.

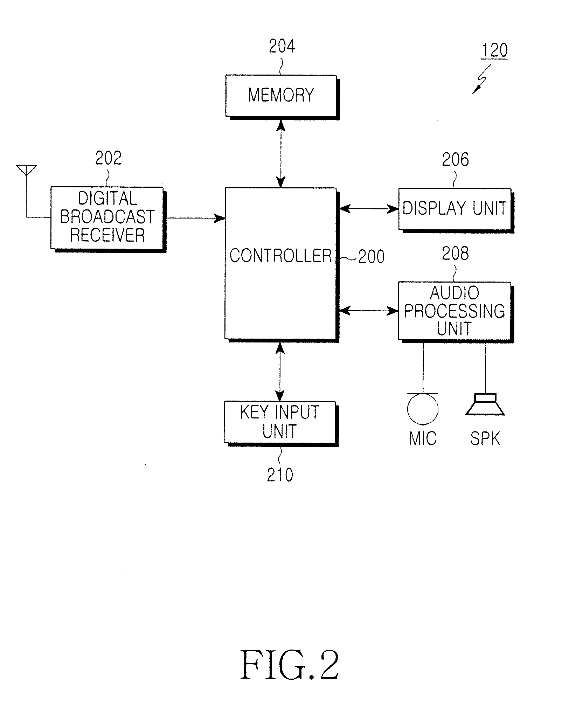

A configuration of an exemplary broadcast receiving terminal 120 will now be described with reference to FIG. 2, wherein the broadcast receiving terminal 120 is a digital video broadcast terminal.

Referring to FIG. 2, the broadcast receiving terminal 120 according to an exemplary embodiment of the present invention includes a digital broadcast receiver 202, a memory 204, a controller 200, a key input unit 210, a display unit 206, and an audio processing unit 208.

If a broadcast channel of a predetermined broadcast station is selected by control of the controller 200, the digital broadcast receiver 202 receives and demodulates digital broadcast data of a selected channel from among digital broadcast data of at least one broadcast channel served in a frequency band used by the broadcast station and outputs the demodulated digital broadcast frame to the controller 200. If the digital broadcast system according to an exemplary embodiment of the present invention is a DVB-H broadcast system, the digital broadcast receiver 202 can be a DVB-H Orthogonal Frequency Division Multiplexing (OFDM) demodulator for OFDM demodulating a signal received from a broadcast station broadcasting DVB-H broadcast data and outputting digital broadcast data of a selected by a user. The digital broadcast receiver 202 also receives an ESG data stream from a digital broadcast TS broadcast from a digital broadcast device. The broadcast receiving terminal 120 may include a Radio Frequency (RF) module including an RF transmitter for up-converting and amplifying a frequency of a signal to be transmitted and an RF receiver for low noise amplifying a received signal and down-converting a frequency of the low noise amplified signal.

The memory 204 stores data required for control of the controller 200 and stores ESG data received from the broadcast service providing server 110.

The controller 200 controls a general operation of the digital video broadcast terminal, and decodes a digital broadcast stream input from the digital broadcast receiver 202 and outputs the decoding result to the display unit 206 and the audio processing unit 208 by means of a video signal processing unit (not shown) and an audio signal processing unit (not shown). In particular, according to the current embodiment, the controller 200 confirms application type information and application execution information contained in an ESG acquisition fragment when a broadcast data service is provided.

The key input unit 210 receives a user operation signal, such as a key input, and outputs the user operation signal to the controller 200.

The display unit 206 displays various kinds of display data generated by the broadcast receiving terminal 120, and the display unit 206 may be constructed of Liquid Crystal Display (LCD) which can fully support resolution of broadcast data. If the LCD is implemented in a touch screen method, the display unit 206 may operate as an input unit.

The audio processing unit 208 modulates and converts an electrical signal input from a microphone (MIC) to voice data, and demodulates encoded voice data input from the digital broadcast receiver 202 to an electrical signal and outputs the electrical signal to a speaker (SPK). The audio processing unit 208 can include a data codec (not shown) for processing packet data and the like and an audio codec (not shown) for processing an audio signal such as voice, and may be included in the controller 200.

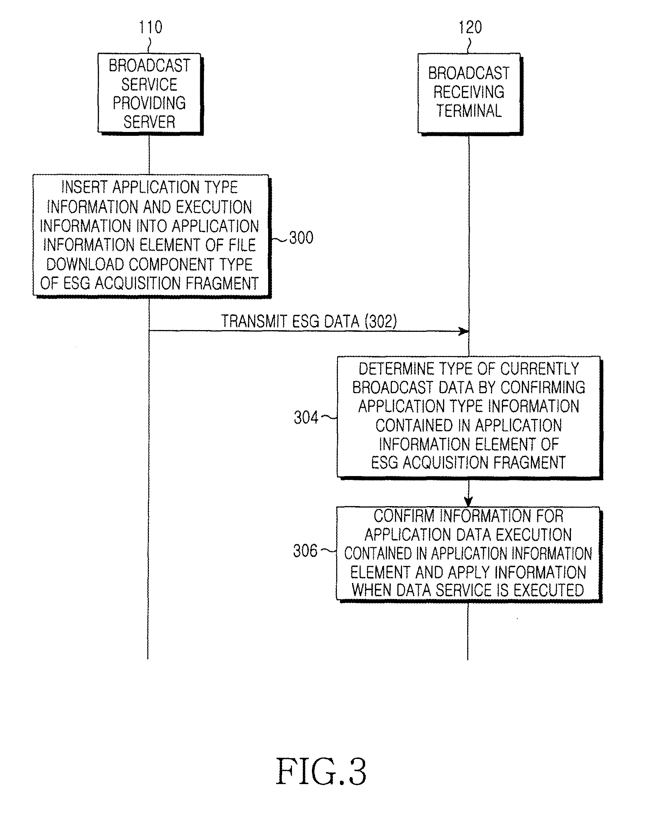

FIG. 3 is a signaling diagram of a process of transmitting application type information and application execution information for a broadcast data service from the broadcast service providing server 110 to the broadcast receiving terminal 120 in the DVB-H system illustrated in FIG. 1, according to an exemplary embodiment of the present invention.

Referring to FIG. 3, the broadcast service providing server 110 inserts application type information and application execution information into an application information element of a file download component type of an ESG acquisition fragment in step 300. The application type information and the application execution information can be contained in the ESG using the application type classification scheme illustrated in FIG. 7 and the extended application information types illustrated in FIGs. 8 and 9. The ESG can be as illustrated in FIG. 10. The application type information and the application execution information for the broadcast data service can be transmitted using the ESG by transmitting the ESG to the broadcast receiving terminal 120 in step 302.

The broadcast receiving terminal 120, which has received the ESG, stores the ESG in the memory 204. Thereafter, in step 304, the broadcast receiving terminal 120 can determine a type of currently broadcast application data by confirming application type information contained in the application information element of the ESG acquisition fragment when the broadcast data service is provided. In step 306, the broadcast receiving terminal 120 confirms the application execution information contained in the application information element and can apply the information when the data service is executed.

As described above, according to exemplary embodiments of the present invention, by enabling to transmit information on various broadcast application services provided when a broadcast data service is provided, it is advantageous that a DVB-H broadcast data application service is provided in the future. Accordingly, demands of broadcast service providers requesting various types of data services can be satisfied.

While the invention has been shown and described with reference to a certain exemplary embodiments thereof, it will be understood by those skilled in the art that various changes in form and details may be made therein without departing from the scope of the invention as defined by the appended claims.

## Claims

1. A system for providing application information of a broadcast data service, the system comprising:
a broadcast service providing server for inserting at least one of application type information and application execution information into an acquisition fragment of an electronic service guide, ESG, and transmitting the ESG; and
a broadcast receiving terminal for receiving the ESG and determining at least one of the application type information and application execution information contained in the acquisition fragment when the broadcast data service is provided.

2. The system of claim 1, wherein the application type information is contained in an application information element, which contains an application information type, AppInfoType, of a file download component type of the acquisition fragment.

3. The system of claim 2, wherein a classification scheme of application types comprises an ID value corresponding to each of at least one piece of application type information, and application type values for identifying the application type information are contained in the application information element using the classification scheme.

4. The system of claim 2, wherein the application information element of the file download component type of the acquisition fragment comprises the application execution information.

5. The system of claim 4, wherein the application execution information according to the application types is included in a complex type.

6. The system of claim 5, wherein the application execution information can be contained in the application information element by inserting the complex type into the application information element.

7. The system of claim 6, wherein the complex type is obtained by extending the application information type, AppInfoType.

8. A method of providing application information of a broadcast data service in a Digital Video Broadcasting-Handheld, DVB-H, system, the method comprising:
inserting at least one of application type information and application execution information into an acquisition fragment of an electronic service guide, ESG;
transmitting the ESG;
receiving the ESG; and
determining at least one of the application type information and application execution information contained in the acquisition fragment.

9. The method of claim 8, wherein the application type information is contained in an application information element, which contains an application information type, AppInfo Type, of a file download component type of the acquisition fragment.

10. The method of claim 9, wherein a classification scheme of application types comprises an ID value corresponding to each of at least one piece of application type information, and application type values for identifying the application type information are contained in the application information element using the classification scheme.

11. The method of claim 9, wherein the application information element of the file download component type of the acquisition fragment comprises the application execution information.

12. The method of claim 11, wherein the application execution information according to the application types is included in a complex type.

13. The method of claim 12, further comprising inserting the complex type into the application information element.

14. The method of claim 13, wherein the complex type is obtained by extending the application information type, AppInfoType.
